# FASCICULE DE BREVET EUROPEEN

(11) **EP 0 768 028 B1**
(45) Date de publication et mention de la délivrance du brevet: **20.05.1998**
(21) Numéro de dépôt: 96460035.7
(22) Date de dépôt: 15.10.1996
(51) Int. Cl.: A01K 9/00, A01K 5/02

(54) **Installation de préparation et de distribution d'un aliment liquide à des animaux**
Anlage zur Herstellung und Verteilung von flüssiger Nahrung für Tiere
Apparatus for preparing and supplying liquid feed to animals

(30) Priorité: 16.10.1995 FR 9512321
(43) Date de publication de la demande: 16.04.1997
(73) Titulaire: Asserva SA, 22403 Lamballe Cedex (FR)
(72) Inventeur: Gouret, Roland, 22400 Marque Lamballe (FR); Gouret, Loic, 22270 Saint-Rieul (FR); Bouffet, Pierre, 44500 La Baule (FR)
(74) Mandataire: Maillet, Alain

(56) Documents cités:
- EP-A- 0 373 147
- DE-A- 1 607 130
- DE-A- 1 955 418
- DE-A- 2 229 806
- FR-A- 1 539 401
- FR-A- 2 458 997
- FR-E- 90 259
- GB-A- 2 142 812
- US-A- 4 910 024

## Description

La présente invention concerne une installation de préparation et de distribution d'un aliment liquide à des animaux sous forme de doses d'une ration journalière dudit aliment. Cette installation est par exemple destinée à l'alimentation liquide d'animaux, tels que des veaux, élevés en liberté et en libre service alimentaire.

On connaît déjà des installations de préparation d'un aliment liquide destiné à être distribué à des animaux et on se reportera utilement au document de brevet DE-A-1 955 418 et FR-A-2 458 997. L'aliment qui est ainsi préparé est un lait qui est reconstitué à partir d'une poudre de lait et de l'eau à des températures déterminées de préparation. La préparation a donc lieu par mélange de ces deux ingrédients dans une cuve unique. Afin de distribuer le lait ainsi reconstitué à une température acceptable par les animaux et afin également que ce lait soit parfaitement solubilisé, il est prévu dans les documents de brevet susmentionnés une seconde cuve dite cuve de stockage. Un processus est également décrit dans ces documents pour assurer le transfert dans la cuve de stockage du lait préparé dans la cuve de préparation.

Dans ces documents, notamment le document DE-A-1 955 418, la distribution de l'aliment aux animaux est directement effectuée par l'éleveur qui dispose pour ce faire d'une canne.

Le problème que cherche à résoudre la présente invention est celui de la distribution du lait à des animaux qui sont élevés en liberté et qui sont donc en libre service alimentaire. Cela signifie que non seulement les animaux peuvent s'alimenter à tous moments de la journée mais également qu'il soit tenu compte de leur individualité pour assurer cette distribution.

On connaît une installation de distribution d'aliment notamment par le document de brevet FR-A-90 259. Dans ce document, la distribution d'une dose de concentration et de volume déterminés est assurée à tout animal qui se présente au box de tétée. Il est également tenu compte de l'individualité de l'animal dans la mesure où la préparation d'une dose est contrôlée par un système mécanique piloté par une bascule prévue dans le box de tétée.

Une telle installation n'est manifestement pas prévue pour un troupeau relativement important d'animaux, par exemple au moins une centaine de têtes.

Un problème qui se pose lorsqu'on a affaire à un nombre de têtes relativement important à nourrir en libre service est celui de la quantité d'aliment qu'il faut préparer et le moment de sa préparation. Or, on sait que les laits reconstitués ne peuvent pas être préparés trop en avance car il peut alors se développer des germes bactériens qui peuvent entraîner des dommages importants dans le troupeau. Il est donc nécessaire de prévoir une installation dans laquelle la préparation est liée à la distribution.

Le but de l'invention est donc de prévoir une installation de préparation et de distribution d'un aliment liquide à des animaux d'un troupeau relativement important qui permette de résoudre le problème mentionné ci-dessus.

A cet effet, une installation de préparation et de distribution d'un aliment liquide à des animaux selon l'invention est du type qui comprend une pluralité de stations d'alimentation reliées à une unité de préparation d'aliment, ladite unité de préparation d'aliment comprenant une cuve de préparation dans laquelle sont mélangés et agités au moins un aliment non-préparé et un ingrédient liquide, ladite installation comprenant une cuve d'attente, des moyens pour transvaser dans ladite cuve d'attente l'aliment préalablement préparé dans la cuve de préparation.

Elle est caractérisée en ce qu'elle comprend des moyens pour distribuer, sous forme d'une dose, à chaque station d'alimentation dans laquelle vient d'entrer un animal, l'aliment préparé contenu dans ladite cuve d'attente, lesdits moyens étant constitué d'une unité de dosage comprenant une cuve de dosage pourvue de moyens pour déterminer la quantité d'aliment qu'elle contient, et des moyens pour remplir ladite cuve d'un volume d'aliment liquide issu de la cuve d'attente déterminé en fonction dudit animal par une unité de commande, le volume d'aliment contenu dans ladite cuve de dosage étant ensuite distribué sous forme d'une dose.

L'invention concerne également une installation de préparation et de distribution d'un aliment liquide à des animaux qui est du type qui comprend une pluralité d'unité d'alimentation constituée chacune d'une pluralité d'une pluralité de stations d'alimentation reliées à une cuve d'attente, chaque cuve d'attente étant alimentée par une unique cuve de préparation dans laquelle sont mélangés et agités au moins un aliment non-préparé et un ingrédient liquide.

Elle est alors caractérisée en ce que chaque unité d'alimentation comprend des moyens pour distribuer, sous forme d'une dose, à chaque station d'alimentation reliée à elle et dans laquelle vient d'entrer un animal, l'aliment préparé contenu dans ladite cuve d'attente, lesdits moyens étant constitué d'une unité de dosage comprenant une cuve de dosage pourvue de moyens pour déterminer la quantité d'aliment qu'elle contient, et des moyens pour remplir ladite cuve d'un volume d'aliment liquide issu de la cuve d'attente de ladite unité d'alimentation, ledit volume étant déterminé en fonction dudit animal par une unité de commande, le volume d'aliment contenu dans ladite cuve de dosage étant ensuite distribué sous forme d'une dose.

Ladite ou chaque unité de dosage d'une installation selon l'invention comprend une amenée d'un ingrédient liquide et des moyens pour emplir ladite cuve de dosage d'un volume d'ingrédient liquide déterminé par ladite unité de commande afin d'abaisser la concentration dudit aliment liquide.

Selon une autre caractéristique de l'invention, ladite unité de commande calcule le volume de chaque dose à distribuer à un animal comme étant inférieur au volume d'un biberon mais le plus proche de celui-ci et comme étant tel que ledit volume multiplié par un nombre entier donne le volume de la ration alimentaire du jour pour l'animal considéré.

Selon une autre caractéristique de l'invention, chaque station d'alimentation est pourvue d'un détecteur d'animal prévu pour détecter la présence d'un animal dans la station d'alimentation et pour délivrer un numéro d'identification affecté audit animal, et en ce que ladite unité de commande est prévue pour commander, en fonction dudit numéro d'identification délivré par chaque détecteur, la distribution d'une dose alimentaire donnée à chaque station d'alimentation.

Selon une autre caractéristique de l'invention, ladite unité de commande est prévue pour commander la préparation de l'aliment dans ladite cuve de préparation pour le transvaser ensuite vers ladite ou une cuve d'attente lorsqu'un volume prédéterminé de ladite cuve d'attente a été distribué, ladite unité de commande déterminant ledit volume d'aliment distribué en comptabilisant le volume d'aliment utilisé par chaque dose distribuée depuis la dernière préparation.

Selon une autre caractéristique de l'invention, ladite unité de commande est prévue pour commander le transvasement de la cuve de préparation vers la cuve de stockage au bout d'un laps de temps prédéterminé après le début de la préparation.

Selon une autre caractéristique de l'invention, ladite unité de commande est pourvue d'une base de données pouvant être adressée par ledit numéro d'identification délivré par chaque détecteur, ladite base de données répertoriant les données de chaque animal du troupeau qui permettent le calcul desdits volumes.

Selon une autre caractéristique de l'invention, chaque station d'alimentation est pourvue d'un biberon et d'une sonde de niveau prévue pour mesurer la quantité d'aliment contenu dans ledit biberon, ladite unité commandant la distribution d'une nouvelle dose dans le biberon quand celui-ci est vide à moins que l'animal ait bu un crédit de doses déterminé ou prédéterminé.

Selon une autre caractéristique de l'invention, chaque station d'alimentation est pourvue d'un biberon lui-même pourvu d'une tétine, ladite tétine étant montée de manière escamotable lorsque l'animal a bu un crédit de doses prédéterminé ou déterminé.

Selon une autre caractéristique de l'invention, ladite unité de dosage comprend une cuve de stockage destinée à contenir un aliment complémentaire et des moyens pour emplir ladite cuve de dosage d'un volume déterminé d'aliment complémentaire issu de la cuve de stockage, ladite unité de commande détermine le volume d'aliment liquide, le volume d'ingrédient liquide et/ou le volume d'aliment complémentaire nécessaires dans une dose.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
les Figs. 1a et 1b qui sont destinées à être lues ensemble représentent une vue schématique d'une installation selon un premier mode de réalisation de l'invention,
les Figs. 2a et 2b sont des vues schématiques d'une station d'alimentation d'une installation selon l'invention respectivement avec la tétine en position de fonctionnement et avec la tétine escamotée, et
la Fig. 3 est une vue schématique d'une installation selon un second mode de réalisation de l'invention.

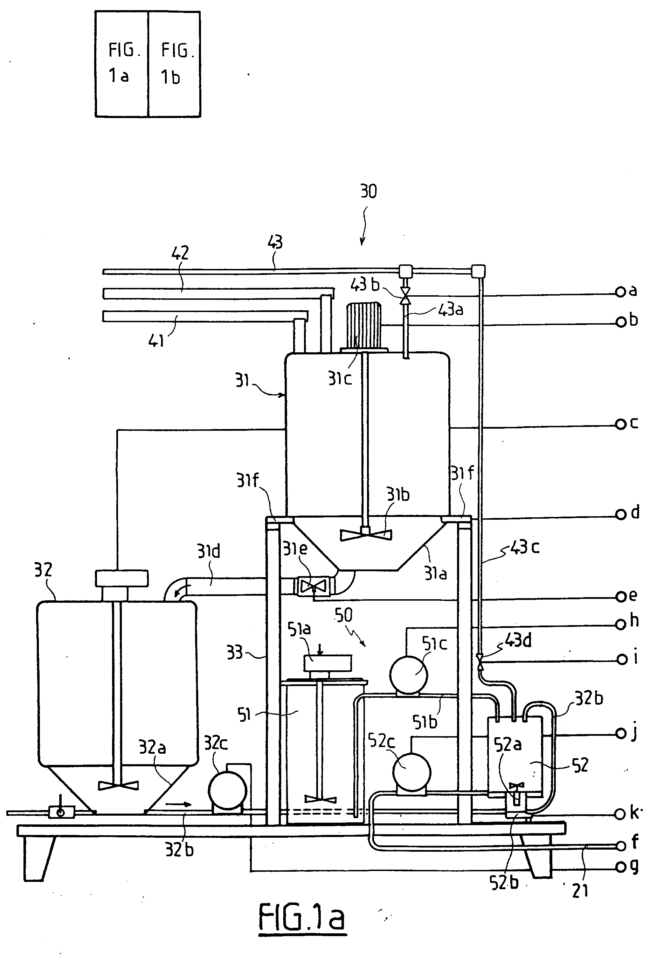

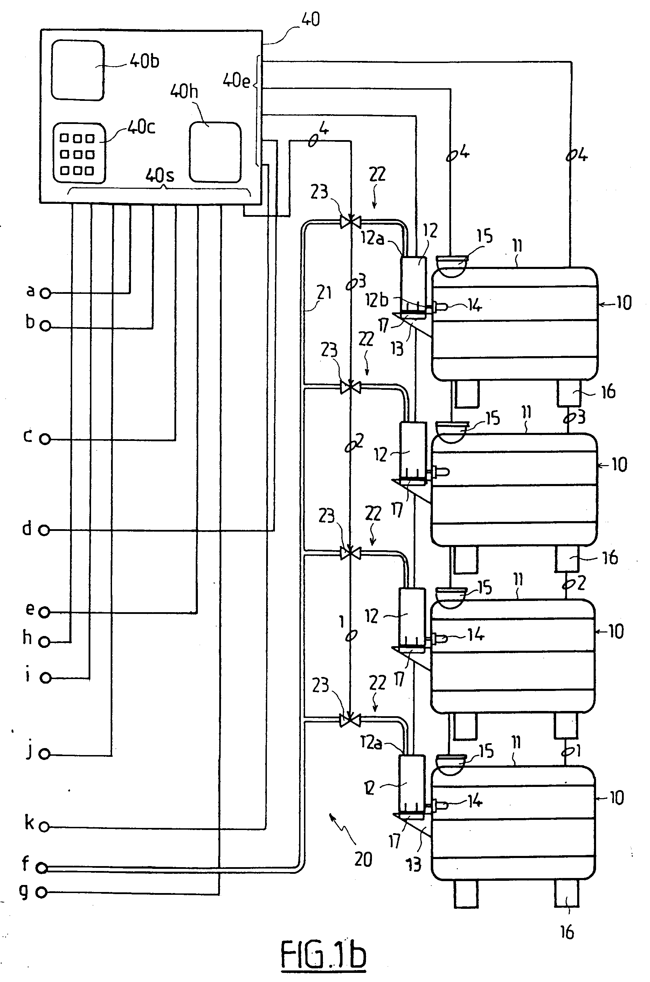

Pour la lecture des Figs. 1a et 1b, on les mettra l'une à côté de l'autre comme cela est représenté dans l'encart de la Fig. 1a et on cherchera à faire se correspondre les points marqués d'une lettre minuscule, a à j.

L'installation pour la distribution d'aliments liquides représentée aux Figs. 1a et 1b comporte une pluralité de stations d'alimentation 10 (ici, à titre d'illustration, seulement au nombre de quatre) qui sont reliées, par un réseau de canalisations 20 approprié, à une unité de préparation d'aliment 30. Le nombre de quatre pour les stations d'alimentation permet la distribution d'un aliment à un troupeau d'environ cent cinquante bêtes. Comme on le comprendra par la suite, l'unité 30 est prévue pour la préparation d'aliment liquide qui est alors distribué, par le réseau 20, à une ou plusieurs stations d'alimentation 10.

Chaque station d'alimentation 10 est essentiellement constituée d'une case 11 prévue pour recevoir l'animal et est par exemple constituée, comme cela est connu en soi, de tubes soudés entre eux de manière à former deux parois latérales entre lesquelles l'animal peut se placer. Chaque station 10 est pourvue d'un biberon 12 reposant sur une tablette 13 solidaire de la case 11. Chaque biberon 12 comporte, dans sa partie supérieure, une entrée 12a pour l'introduction de l'aliment liquide et, dans sa partie inférieure, une sortie 12b reliée à une tétine 14.

L'animal qui désire s'alimenter doit entrer dans la case 11 et atteindre la tétine 14 par laquelle il boira l'aliment qui a été déversé dans le biberon 12.

Dans l'exemple de réalisation représenté, le réseau de canalisations 20 est essentiellement constitué d'une canalisation principale 21 dont l'extrémité amont est reliée à l'unité de préparation d'aliment 30. A des endroits appropriés de la canalisation 21 tenant compte de l'emplacement géographique de chaque station 10, sont respectivement reliées les extrémités amont de canalisations 22 dont les extrémités aval sont respectivement reliées aux entrées 12a des biberons 12 des stations 10. Une électrovanne 23 est prévue sur chaque canalisation 22 pour permettre ou pas la distribution de l'aliment liquide circulant dans la canalisation 21 vers le biberon 12 correspondant.

L'unité de préparation 30 est essentiellement constituée d'une cuve de préparation 31 dans laquelle est préparé l'aliment à distribuer et d'une cuve d'attente 32 dans laquelle est stocké l'aliment qui a été préalablement préparé dans la cuve 31 et qui a été transvasé dans la cuve 32.

La cuve de préparation 31 est par exemple de forme sensiblement cylindrique se terminant à sa base par une partie tronconique 31a. Dans sa partie supérieure, la cuve 31 est prévue pour recevoir, par deux canalisations 41 et 42, l'aliment non-préparé et un additif (facultatif) respectivement stockés dans des containers appropriés (non représentés). Elle est également prévue pour recevoir, par une canalisation 43 et sa dérivation 43a, un ingrédient liquide.

Par exemple, l'aliment non-préparé est une poudre de lait et l'ingrédient liquide est de l'eau chaude à température déterminée. On comprendra que la présence de la canalisation 42 servant à la distribution de l'additif est facultative au regard de l'invention. De même, on comprendra que l'invention n'est pas limitée à une nature particulière d'aliments dès lors que sa préparation consiste en un mélange avec au moins un ingrédient liquide.

Une électrovanne 43b est prévue sur la canalisation 43a pour permettre ou pas l'introduction de l'ingrédient liquide dans la cuve de préparation 31.

A l'intérieur de la cuve 31, est monté un agitateur 31b constitué, par exemple, d'une hélice entraînée en rotation par un moteur électrique 31c.

La cuve de préparation 31 est montée sur un châssis 33 de l'unité 30 par l'intermédiaire de dispositifs de pesage 31f, par exemple constitués de jauges de contraintes prévues pour délivrer un signal représentatif du poids de la cuve 31. Comme on le verra dans la suite de la description, ce signal est nécessaire à la préparation de l'aliment dans la cuve 31 pour connaître le poids de chaque ingrédient introduit dans la cuve 31.

De la base 31a de la cuve 31, part une canalisation 31d dont l'extrémité aval débouche dans la partie supérieure de la seconde cuve 32. Une électrovanne 31e est prévue dans la canalisation 31d pour permettre ou pas la circulation de l'aliment préparé dans la cuve 31 vers la cuve 32.

On notera que le transvasement de la cuve 31 vers la cuve 32 est réalisé, dans le mode de réalisation représenté, par gravité mais, que sans sortir du cadre de la présente invention, il pourrait être réalisé au moyen d'une pompe adaptée.

La cuve d'attente 32 est par exemple de forme sensiblement cylindrique pourvue d'une base tronconique 32a de laquelle part une canalisation 32b.

A l'intérieur de la cuve 32, est monté un agitateur 32f constitué, par exemple, d'une hélice entraînée en rotation par un moteur électrique 32g.

A la base de la cuve 32, débouche une canalisation 32d pourvue d'une vanne 32e, manuelle ou à commande électrique. La canalisation 32d est reliée à une source d'eau et sert essentiellement au lavage de l'installation, ou plus exactement de la partie basse de la cuve 32, de la canalisation 21, des canalisations 22 et de leurs électrovannes 23 et des biberons 12.

L'installation représentée aux Figs. 1a et 1b comporte encore une unité de dosage 50.

Cette unité de dosage 50 comprend essentiellement une cuve de stockage 51 pourvue d'un agitateur 51a qui est destinée à contenir un aliment complémentaire qui peut être distribué en quantité variable à certains animaux et éventuellement pas aux autres.

Elle comprend encore une cuve de dosage 52, pourvue également d'un agitateur 52a. Elle est prévue pour recevoir, par plusieurs entrées dans sa partie supérieure, la canalisation 32b issue, via une pompe 32c, de la cuve d'attente 32, une canalisation 51b issue, via une pompe 51c, de la cuve de stockage 51 et une canalisation 43c reliée, via une électrovanne 43d, à la canalisation 43 d'amenée de l'ingrédient liquide.

La cuve de dosage 52 est montée sur le châssis 33 par l'intermédiaire d'un dispositif de pesée 52b.

La sortie de la cuve de dosage 52 est reliée, via une pompe 52c, à la canalisation 21 pour assurer ensuite la distribution de la dose contenue dans la cuve de dosage 52.

L'installation de l'invention comporte encore une unité de commande 40 pourvue d'une pluralité de ports d'entrée 40e qui sont respectivement reliés aux sorties de détecteurs d'animaux 15 respectivement montés sur les cases 11, aux sorties de capteurs de poids 16, chacun étant monté de manière à pouvoir peser l'animal qui est présent dans une case 11, aux sorties de sondes de niveau 17 prévus dans chaque biberon 12 de manière en mesurer la quantité d'aliment qu'il contient, ainsi qu'aux sorties des capteurs de poids 31f servant à la mesure du poids de la cuve 31.

Les ports d'entrée 40e sont également reliés à la sortie du dispositif de pesée 52b.

L'unité 40 est également pourvue d'une pluralité de ports de sortie 40s respectivement reliés aux entrées de commande des organes suivants: les électrovannes 23, l'électrovanne 43b, l'électrovanne 31e, éventuellement l'électrovanne 32e (la liaison n'est pas représentée), les moteurs 31c et 32g des agitateurs 31b et 32f et la pompe 32c, les pompes 51c et 52c et l'électrovanne 43d.

L'unité 40 comporte tous les éléments matériels et logiciels nécessaires à son fonctionnement tel qu'il sera explicité ci-dessous et, en particulier, une horloge 40h et une base de données 40b. L'horloge 40h est prévue pour fournir la date et l'heure à l'unité 40 et à l'installation en général. Dans la base de données 40b, sont stockées toutes les informations nécessaires permettant à l'unité 40 de calculer la ration alimentaire du jour dont a besoin un animal donné du troupeau. Parmi ces données, on peut citer l'âge de l'animal, son poids, et d'autres données, tel qu'un état de santé général, qui peuvent être entrées, par l'éleveur lui-même, par l'intermédiaire d'un clavier 40c (ou tout autre organe de dialogue homme-machine).

L'unité 40 va également calculer, pour un animal donné et selon la ration alimentaire du jour qu'elle aura déterminée comme cela est expliqué ci-dessus, le volume de la dose qui sera transférée de l'unité de préparation 30 à la station d'alimentation 10 où se trouve l'animal. Pour ce faire, l'unité 40 va déterminer le volume inférieur au volume d'un biberon 12 et le plus proche de celui-ci qui, multiplié par un nombre entier, va donner le volume de la ration alimentaire du jour de cet animal. Par exemple, pour un volume de biberon 12 de 500 ml et une ration alimentaire du jour de 11,2 litres, le volume de la dose calculée sera de 487 ml.

Chaque détecteur 15 est prévu pour détecter la présence d'un animal dans la case 11 correspondante et pour délivrer, lors de cette présence, un signal numérique fourni à l'unité 40 et représentatif de l'identification de l'animal présent. Pour ce faire, chaque animal porte un dispositif d'identification qui peut être lu par chaque détecteur 15. Ce dispositif d'identification peut, par exemple, être une boucle d'oreille qui émet par signaux hertziens un code numérique pouvant être lu par chaque détecteur 15.

Le fonctionnement de l'installation représentée aux Figs. 1a et 1b est le suivant.

A des heures programmées de la journée, l'unité 40 commande le processus de préparation d'une quantité prédéterminée d'aliment dans la cuve 31. Ces heures correspondent aux heures normales d'alimentation des animaux, par exemple pour un repas le matin, un repas le midi et un repas le soir en fin de journée.

Le processus de préparation est le suivant. L'unité 40 commande la distribution d'une quantité prédéterminée d'aliment non-préparé (par la canalisation 41) et, éventuellement, d'une quantité prédéterminée d'additif (par la canalisation 42). L'unité 40 commande l'ouverture de l'électrovanne 43b jusqu'à ce que le poids de la préparation dans la cuve 31, tel que mesuré par les capteurs 31f, atteigne une valeur qui correspond à une concentration désirée, après quoi l'unité 40 commande la fermeture de la vanne 43b.

On notera que ce premier processus de préparation est initialisé par l'horloge 40h de l'unité 40 et est indépendant de la présence ou pas d'un animal dans une case 11. D'ailleurs, étant la première préparation d'un cycle, aucun animal n'est normalement présent dans les cases 11, l'heure de déclenchement du processus de préparation étant suffisamment tôt pour cela. On notera encore que si un animal venait à ce moment-là dans une case 11 alors qu'aucun aliment n'est encore préparé, il ne serait pas possible et pas souhaitable de répondre à sa demande.

Simultanément à cette opération de préparation, le moteur 31c est mis en rotation assurant ainsi un mélange homogène dans la cuve 31.

Au bout d'un temps prédéterminé, par exemple de 15 minutes après l'initialisation, l'unité 40 commande l'ouverture de l'électrovanne 31e, ce qui va avoir pour effet de transférer la quantité d'aliment préparé de la cuve 31 dans la cuve d'attente 32. Une fois ce transfert effectué, l'unité 40 commande la fermeture de l'électrovanne 31e.

On notera que l'aliment dans la cuve 31 a été agité suffisamment longtemps pour assurer un mélange homogène et une bonne dissolution de tous les éléments de l'aliment non-préparé dans le liquide.

Lorsqu'un animal se présente dans une case 11, le détecteur 15 lit son code d'identification, par exemple émis par le dispositif d'identification qu'il porte. Ce code est fourni à l'unité 40 et sert alors à l'adressage de la base de donnée 40b. A partir des données contenues dans cette base de donnée 40b pour l'animal considéré, l'unité 40 va calculer la ration alimentaire du jour ainsi que le volume de la dose à distribuer et l'éventuel volume d'aliment complémentaire.

Ainsi, l'unité 40 détermine le volume de chaque ingrédient, c'est-à-dire un volume d'aliment contenu dans la cuve d'attente 32, un volume de liquide issu de la canalisation 43c et un volume d'aliment complémentaire issu de la cuve de stockage 51. Ensuite, elle commande la pompe 32c pour emplir la cuve de dosage 52 jusqu'au volume d'aliment calculé, l'électrovanne 43d pour emplir la cuve de dosage 52 jusqu'au volume d'eau calculé, ce qui permet un abaissement de la concentration d'aliment par rapport à la concentration standard de l'aliment contenu dans la cuve 32 et la pompe 51c pour emplir la cuve de dosage 52 jusqu'au volume d'aliment complémentaire calculé.

On notera que le dispositif de pesée 52b dont est pourvue la cuve de dosage 52 permet de déterminer le volume d'aliment contenu dans ladite cuve 52.

L'unité 40 commande également l'ouverture de la vanne 23 correspondant à la case 11 où l'animal se trouve ce qui va provoquer le remplissage du biberon 12 correspondant avec un volume d'aliment égal à celui de la dose calculée. Le processus de distribution est quasi-instantané et l'animal est donc servi aussitôt après son arrivée dans la case 11. Il boit donc l'aliment contenu dans le biberon 12.

En général, une dose ne va pas lui suffire. L'unité 40 va détecter la fin d'une dose par le signal issu de la sonde de niveau 17. Si, à ce moment et à un court temps prédéterminé après ce moment là, l'unité 40 n'a pas détecté, au moyen du détecteur 15, la sortie de l'animal de la case 11, elle va commander la distribution d'une nouvelle dose dans le biberon 12 correspondant. Ce processus va se poursuivre jusqu'à ce que l'animal soit sorti de la case 11.

Le processus va également s'interrompre après qu'un crédit de doses sera consommé par l'animal. Par exemple, pour le repas considéré, le crédit est de quatre doses.

L'unité 40 lit alors le signal issu de la sonde de niveau 17. Si une quantité de liquide est encore présente dans le biberon 12, l'unité 40 en tiendra compte pour un nouveau calcul des prochaines doses qui seront distribuées à l'animal qui vient de sortir de la case 11 mais aussi pour le calcul de la prochaine dose à distribuer à l'animal qui va suivre. On notera que l'unité de commande 40 détermine et calcule par conséquent la dose à distribuer à une station d'alimentation 10 en fonction de la quantité d'aliment encore présente dans ledit biberon 12.

L'unité 40 lit aussi le signal de poids émanant du capteur 16 et en déduit une donnée représentative du comportement alimentaire de l'animal qui sera alors stockée dans la base de données 40b de l'unité de commande 40.

Lorsqu'un certain volume d'aliment contenu dans la cuve d'attente 32 a été distribué, l'unité 40 déclenche un nouveau processus de préparation d'aliment dans la cuve 31. Cette quantité est par exemple déterminée par l'unité 40 en comptabilisant le volume d'aliment utilisé par chaque dose distribuée depuis la dernière préparation. Le processus de préparation est tout à fait identique à celui qui a été décrit ci-dessus. Après une durée de préparation prédéterminée, par exemple de 15 minutes comme précédemment, l'unité 40, à l'instar de ce qui est décrit ci-dessus, va déclencher le transfert de l'aliment préparé contenu dans la cuve 31 vers la cuve 32.

On notera que, pendant que l'aliment est préparé dans la cuve 31, l'aliment dans la cuve 32 est distribué, sous forme de doses, aux stations d'alimentation 10 qui en font la demande.

Les cycles décrits ci-dessus sont répétés jusqu'à une heure prédéterminée où normalement tous les animaux sont venus s'alimenter.

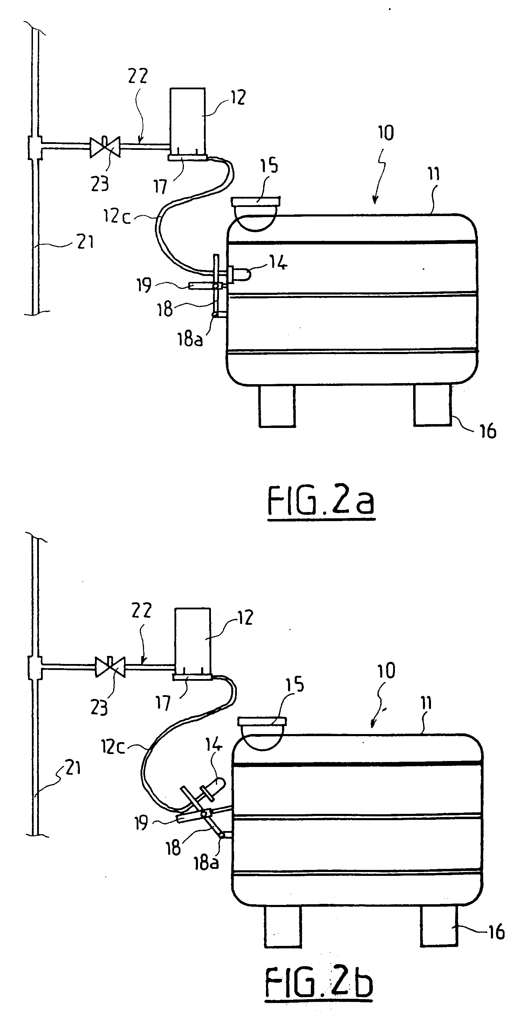

On a représenté aux Figs. 2a et 2b une station d'alimentation 10 qui fait l'objet d'un perfectionnement de l'invention. On reconnaît sur ces Figs. 2a et 2b, la case 11, le biberon 12, la tétine 14, le détecteur de présence 15, le détecteur de poids 16 et la sonde de niveau 17. Le biberon 12 est monté sur une tablette qui n'a pas été représentée. Il est relié à la canalisation 21 par l'intermédiaire d'une canalisation 22 pourvue d'une électrovanne 23.

Selon ce perfectionnement, la tétine 14 est escamotable. En effet, lorsqu'un animal se présente dans une case 11, il a en réalité un crédit correspondant à un certain nombre de doses. L'unité 40 va donc commander l'installation de manière à lui distribuer ce nombre de doses, et ce de la manière qui a été vue précédemment.

Lorsque l'animal a consommé son crédit de doses, il doit quitter la case 11. En escamotant la tétine 14 à la fin de la consommation de ce crédit, l'animal n'attend pas une nouvelle dose et quitte alors la case 11.

Comme on peut le constater sur les Figs. 2a et 2b, la tétine 14 est montée sur un cadre 18 prévu pour pouvoir pivoter autour d'un axe 18a. Elle est reliée à la sortie du biberon 12 par l'intermédiaire d'un tuyau souple 12c. Ce cadre 18 est commandé en pivotement par un vérin 19, par exemple pneumatique, dont la tige est solidaire par l'intermédiaire d'un pivot de la case 11 et le fût du cadre 18 par un autre pivot. Ainsi, à la fin de la consommation du crédit, l'unité 40 commande en extension le vérin 19 ce qui a pour effet de faire pivoter le cadre 18 et de faire s'escamoter la tétine 14. On voit à la Fig. 2b la tétine 14 escamotée.

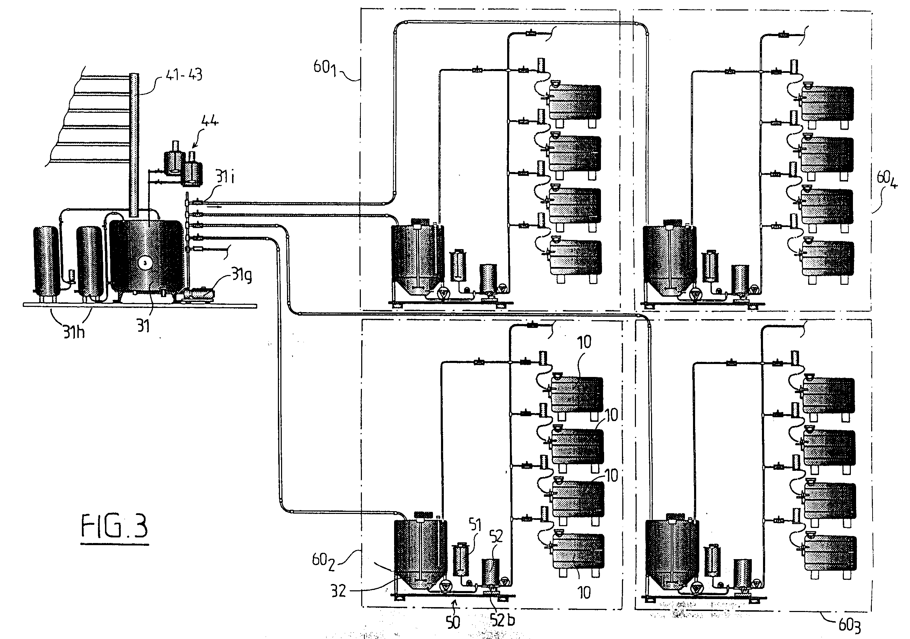

La Fig. 3 montre une installation qui est un mode de réalisation de l'invention qui est mieux adapté pour l'élevage d'un troupeau de nombreuses bêtes, de l'ordre de 500 bêtes. Comme on peut le constater, cette installation comporte quatre unités d'alimentation 60₁ à 60₄ qui sont respectivement reliées à une unique cuve de préparation 31. On reconnaît également les canalisations d'amenée des ingrédients 41-43, des cuves d'ingrédients complémentaires 44, des réservoirs de stockage d'eau froide et d'eau chaude 31h et enfin une pompe 31g.

Chaque unité d'alimentation 60ᵢ (i = 1 à 4) comprend une cuve d'attente 32 (on a gardé les mêmes références pour la clarté de la description) et une unité de dosage 50 qui comprend, à l'instar du premier mode de réalisation, une cuve de dosage 52 pourvue de moyens 52b, tels qu'un capteur de poids ou jauge de contrainte, pour déterminer la quantité d'aliment qu'elle contient.

Chaque unité d'alimentation 60ᵢ comporte encore une pluralité de stations d'alimentation 10 qui ont même constitution que les stations d'alimentation 10 du premier mode de réalisation.

Chaque cuve de stockage 32 est reliée à la cuve de préparation 31 par une canalisation appropriée dans laquelle on trouve la pompe 31g et une électrovanne 31ᵢ.

L'ensemble des éléments de l'installation de ce mode de réalisation est piloté par une unité de commande (non représentée) qui présente les mêmes fonctions que l'unité 40 du premier mode de réalisation, à la différence qu'elle gère quatre unités au lieu d'une seule. Ainsi, le fonctionnement de chaque unité d'alimentation est sensiblement le même que celui de l'installation du premier mode de réalisation.

## Revendications

1. Installation de préparation et de distribution d'un aliment liquide à des animaux, du type qui comprend une pluralité de stations d'alimentation (10) reliées à une unité de préparation d'aliment (30), ladite unité de préparation d'aliment (30) comprenant une cuve de préparation (31) dans laquelle sont mélangés et agités au moins un aliment non-préparé et un ingrédient liquide, ladite installation comprenant une cuve d'attente (32), des moyens (31d, 31e) pour transvaser dans ladite cuve d'attente (32) l'aliment préalablement préparé dans la cuve de préparation (31), caractérisé en ce qu'elle comprend des moyens pour distribuer, sous forme d'une dose, à chaque station d'alimentation (10) dans laquelle vient d'entrer un animal, l'aliment préparé contenu dans ladite cuve d'attente (32), lesdits moyens étant constitués d'une unité de dosage (50) comprenant une cuve de dosage (52) pourvue de moyens (52b) pour déterminer la quantité d'aliment qu'elle contient, et des moyens (32c, 52b) pour remplir ladite cuve (52) d'un volume d'aliment liquide issu de la cuve d'attente (32) déterminé en fonction dudit animal par une unité de commande (40), le volume d'aliment contenu dans ladite cuve de dosage (52) étant ensuite distribué sous forme d'une dose.

2. Installation de préparation et de distribution d'un aliment liquide à des animaux, du type qui comprend une pluralité d'unités d'alimentation, chacune étant constituée d'une pluralité de stations d'alimentation (10) reliées à une cuve d'attente (32), chaque cuve d'attente (32) étant alimentée par une unique cuve de préparation (31) dans laquelle sont mélangés et agités au moins un aliment non-préparé et un ingrédient liquide, caractérisée en ce que chaque unité d'alimentation comprend des moyens pour distribuer, sous forme d'une dose, à chaque station d'alimentation (10) reliée à elle et dans laquelle vient d'entrer un animal, l'aliment préparé contenu dans ladite cuve d'attente (32), lesdits moyens étant constitué d'une unité de dosage (50) comprenant une cuve de dosage (52) pourvue de moyens (52b) pour déterminer la quantité d'aliment qu'elle contient, et des moyens (31g, 31i) pour remplir ladite cuve (52) d'un volume d'aliment liquide issu de la cuve d'attente (32) de ladite unité d'alimentation, ledit volume étant déterminé en fonction dudit animal par une unité de commande (40), le volume d'aliment contenu dans ladite cuve de dosage (52) étant ensuite distribué sous forme d'une dose.

3. Installation selon la revendication 1 ou 2, caractérisée en ce que ladite ou chaque unité de dosage (50) comprend une amenée d'un ingrédient liquide et des moyens (51c, 52b) pour emplir ladite cuve de dosage (52) d'un volume d'ingrédient liquide déterminé par ladite unité de commande (40) afin d'abaisser la concentration dudit aliment liquide.

4. Installation selon la revendication 1 ou 2, caractérisée en ce que ladite unité de commande (40) calcule le volume de chaque dose à distribuer à un animal comme étant inférieur au volume d'un biberon (12) mais le plus proche de celui-ci et comme étant tel que ledit volume multiplié par un nombre entier donne le volume de la ration alimentaire du jour pour l'animal considéré.

5. Installation selon une des revendications précédentes, caractérisée en ce que chaque station d'alimentation (10) est pourvue d'un détecteur d'animal (15) prévu pour détecter la présence d'un animal dans la station d'alimentation (10) et pour délivrer un numéro d'identification affecté audit animal, et en ce que ladite unité de commande (40) est prévue pour commander, en fonction dudit numéro d'identification délivré par chaque détecteur (15), la distribution d'une dose alimentaire donnée à chaque station d'alimentation (10).

6. Installation selon une des revendications précédentes, caractérisée en ce que ladite unité de commande (40) est prévue pour commander la préparation de l'aliment dans ladite cuve de préparation (31) pour le transvaser ensuite vers ladite ou une cuve d'attente lorsqu'un certain volume de ladite cuve d'attente (32) a été distribué, ladite unité de commande (40) déterminant ledit volume d'aliment distribué en comptabilisant le volume d'aliment utilisé par chaque dose distribuée depuis la dernière préparation effectuée.

7. Installation selon la revendication 6, caractérisée en ce que ladite unité de commande (40) est prévue pour commander le transvasement de la cuve de préparation vers la ou une cuve d'attente (32) au bout d'un laps de temps prédéterminé après le début de la préparation.

8. Installation selon une des revendications 5 à 7, caractérisée en ce que ladite unité de commande (40) est pourvue d'une base de données (40b) pouvant être adressée par ledit numéro d'identification délivré par chaque détecteur (15), ladite base de données (40b) répertoriant les données de chaque animal du troupeau qui permettent le calcul desdits volumes.

9. Installation selon une des revendications précédentes, caractérisée en ce que chaque station d'alimentation (10) est pourvue d'un biberon (12) et d'une sonde de niveau (17) prévue pour mesurer la quantité d'aliment contenu dans ledit biberon (12), ladite unité (40) commandant la distribution d'une nouvelle dose dans le biberon (12) quand celui-ci est vide à moins que l'animal ait bu un crédit de doses déterminé ou prédéterminé.

10. Installation selon une des revendications précédentes, caractérisée en ce que chaque station d'alimentation (10) est pourvue d'un biberon (12) lui-même pourvu d'une tétine (14), ladite tétine (14) étant montée de manière escamotable lorsque l'animal a bu un crédit de doses prédéterminé ou déterminé.

11. Installation selon une des revendications précédentes, caractérisée en ce que ladite unité de dosage (50) ou chaque unité de dosage (50) comprend une cuve de stockage (51) destinée à contenir un aliment complémentaire et des moyens (51c, 52b) pour emplir ladite cuve de dosage (52) d'un volume déterminé d'aliment complémentaire issu de la cuve de stockage (51), ladite unité de commande (40) détermine le volume d'aliment liquide, le volume d'ingrédient liquide et/ou le volume d'aliment complémentaire nécessaires pour une dose.

## Claims

1. An installation for the preparation and distribution of a liquid feedstuff to animals, of a type comprising a multiplicity of feeding stations (10) connected to a feed preparation unit (30), the said feed preparation unit (30) comprising a preparation tank (31) in which at least one non-prepared feedstuff and one liquid ingredient are mixed, the said installation comprising a storage tank (32), media (31d, 31e) for decanting into the said storage tank (32) the feed which has been prepared beforehand in the preparation tank (31), characterised in that it comprises media for distributing, in the form of a metered volume, to each feeding station (10) into which an animal has entered, the prepared feed contained in the said storage tank (32), the said media consisting of a metering unit (50), comprising a metering tank (52) provided with means (52b) for determining the quantity of feed which it contains, and media (32c, 52b) to refill the said tank (52) with a volume of liquid feed deriving from the storage tank (32) determined as a function of the characteristics of the said animal by means of a control unit (40), the volume of the feed contained in the said metering tank (52) then being distributed in the form of a metered volume.

2. An installation for the preparation and distribution of a liquid feedstuff to animals, of a type comprising a multiplicity of feeding units, each being comprised of a multiplicity of feeding stations (10), connected to a storage tank (32), each storage tank (32) being fed by a single preparation tank (31) in which at least one non-prepared feedstuff and one liquid ingredient are mixed and agitated, characterised in that each feed unit comprises media for the distribution, in the form of a metered volume, to each feeding station (10) connected to it and into which an animal has just entered, the prepared feedstuff contained in the said storage tank (32), the said media being comprised of a metering unit (50) consisting of a metering tank (52) provided with media (52b) to determine the quantity of feed which it contains, and media (31g, 31i) to refill the said tank (52) with a volume of liquid feedstuff, the said volume being determined as a function of the characteristics of the said animal, by means of a control unit (40), the volume of feedstuff contained in the said metering tank (52) being then distributed in the form of a metered volume.

3. An installation according to Claim 1 or 2, characterised in that the said metering unit (50), or every metering unit, comprises a feeding duct for a liquid ingredient and media (51c, 52b) to fill the said metering tank (52) with a volume of liquid ingredient determined by the said control unit (40), in order to reduce the concentration of the said liquid feedstuff.

4. An installation according to Claim 1 or 2, characterised in that the said control unit (40) calculates the volume of each metered volume to be distributed to an animal, as being less than the volume of a feeding vessel (12) but close to it, and such that the said volume, multiplied by a whole number, gives the volume of the feedstuff ration for the day for the animal under consideration.

5. An installation according to one of the foregoing Claims, characterised in that each feeding station (10) is provided with an animal detector (15) which is provided in order to detect the presence of an animal in the feeding station (10) and to deliver an identification number issued to the said animal, and in that the said control unit (40) is provided such as to control, on the basis of the said identification number delivered by each detector (15), the distribution of a metered volume of feedstuff issued to each feeding station (10).

6. An installation according to one of the foregoing Claims, characterised in that the said control unit (40) is provided in order to control the preparation of the feedstuff in the said preparation tank (31), to decant it thereafter into the said storage tank or another storage tank, when a certain volume has been distributed from the aid storage tank (32), the said control unit (40) determining the said volume of feedstuff which has been distributed by counting the volume of the feedstuff used for each metered volume distributed since the last preparation was effected.

7. An installation according to Claim 6, characterised in that the said control unit (40) is provided in order to control the decanting from the preparation tank into the storage tank or another storage tank (32), at the end of a predetermined period of time after the start of the preparation.

8. An installation according to one of Claims 5 to 7, characterised in that the said control unit (40) is provided with a database (40b) which is capable of being addressed by the said identification number delivered by each detector (15), the said database (40b) storing the data for each animal of the group, so allowing for the calculation of the said volumes.

9. An installation according to one of the foregoing Claims, characterised in that each feeding station (10) is provided with a feeding vessel (12) and a level sensor (17), provided in order to measure the quantity of feedstuff in the said vessel (12), the said unit (40) controlling the distribution of a new metered volume into the vessel (12) when the said vessel is empty, and provided that the animal has drunk a determined or predetermined number of metered volumes.

10. An installation according to one of the foregoing Claims, characterised in that each feeding station (10) is provided with a drinking vessel (12), itself provided with a teat (14), the said teat (14) being installed in such a manner as to be capable of being folded away when the animal has drunk a predetermined or determined number of metered volumes.

11. An installation according to one of the foregoing Claims, characterised in that the said metering unit (50) or each metering unit (50) consists of a stock tank (51), intended to contain a complementary feedstuff and media (51c, 52b) to top up the said metering tank (52) by a specified volume of complementary feedstuff deriving from the stock vessel (51), the said control unit (40) determining the volume of the liquid feedstuff, the volume of the liquid ingredient, and/or the volume of the complementary feedstuff necessary for one metered volume.

## Patentansprüche

1. Vorrichtung zur Herstellung und Abgabe von Flüssignahrung an Tiere der Art, die mehrere Versorgungsstationen (10) umfaßt, die mit einer Vorrichtung (30) zur Nahrungsherstellung verbunden sind, welche Vorrichtung zur Nahrungsherstellung (30) eine Herstellungswanne (31) umfaßt, in der mindestens ein nichtfertiges Nahrungsmittel und ein flüssiger Zusatzstoff vermischt und verrührt werden, wobei die Anlage eine Vorratswanne (32) und Vorrichtungen (31d, 31e) zum Umfüllen der vorab in der Herstellungswanne (31) hergestellten Nahrung in die Vorratswanne (32) umfaßt, dadurch gekennzeichnet, daß sie an jeder Versorgungsstation (10), in die gerade ein Tier gekommen ist, Vorrichtungen zum Ausgeben einer Portion der fertigen, in der Vorratswanne (32) enthaltenen Nahrung umfaßt, wobei die Vorrichtungen eine Dosierstation (50) haben, die eine Dosierwanne (52) umfaßt, die mit Vorrichtungen (52b) zur Bestimmung der Nahrungsmittelmenge versehen ist, die sie enthält, sowie Vorrichtungen (32c, 52b) zum Befüllen des Behälters (52) mit einer Flüssignahrungsmenge, die aus der Vorratswanne (32) kommt, die abhängig von dem Tier von einer Steuereinheit (40) bestimmt wird, wobei die in der Dosierwanne (52) enthaltene Nahrungsmenge anschließend in Form einer Portion abgegeben wird.

2. Vorrichtung zur Herstellung und Abgabe von Flüssignahrung an Tiere der Art, die mehrere Versorgungseinheiten umfaßt, die jeweils mehrere Versorgungsstationen (10) haben, die mit einer Vorratswanne (32) verbunden sind, wobei jede Vorratswanne (32) von einer einzigen Herstellungswanne (31) versorgt wird, in der mindestens ein nichtfertiges Nahrungsmittel und ein flüssiger Zusatzstoff vermischt und verrührt werden, dadurch gekennzeichnet, daß jede Versorgungseinheit an jeder mit ihr verbundenen Versorgungsstation (10), in die gerade ein Tier gekommen ist, Vorrichtungen zum Ausgeben einer Portion der in der Vorratswanne (32) befindlichen fertigen Nahrung umfaßt, wobei die Vorrichtungen eine Dosierstation (50) haben, die eine Dosierwanne (52) umfaßt, die mit Vorrichtungen (52b) zur Bestimmung der Nahrungsmittelmenge versehen ist, die sie enthält, sowie mit Vorrichtungen (31g, 31i) zum Befüllen der Wanne (52) mit einer Flüssignahrungsmenge, die aus der Vorratswanne (32) der Versorgungseinheit kommt, wobei die Menge abhängig von dem Tier von einer Steuereinheit (40) bestimmt und die in der Dosierwanne (52) enthaltene Nahrungsmenge anschließend in Form einer Portion abgegeben wird.

3. Vorrichtung nach Anspruch 1 oder 2, dadurch gekennzeichnet, daß die oder jede Dosierstation (50) eine Zuleitung für einen flüssigen Zusatzstoff sowie Vorrichtungen (51c, 52b) zum Befüllen der Dosierwanne (52) mit einer Menge flüssigen Zusatzstoffs umfaßt, die von der Steuereinheit (40) zur Verringerung der Konzentration der Flüssignahrung bestimmt wird.

4. Vorrichtung nach Anspruch 1 oder 2, dadurch gekennzeichnet, daß die Steuereinheit (40) die Menge jeder an ein Tier abzugebenden Portion als niedriger als den Inhalt einer Flasche (12), aber diesem so annäherend wie möglich berechnet, und zwar so, daß die mit einer ganzen Zahl multiplizierte Menge die Menge der Nahrungs-Tagesration für das jeweilige Tier ergibt.

5. Vorrichtung nach einem der vorstehenden Ansprüche, dadurch gekennzeichnet, daß jede Versorgungsstation (10) mit einem Tiererkennungsgerät (15) versehen ist, das das Vorhandensein eines Tieres in der Versorgungsstation (10) erkennen sowie eine dem jeweiligen Tier zugeordnete Identifikationsnummer ausgeben soll, sowie dadurch, daß die Steuereinheit (40) vorgesehen ist, in Abhängigkeit der von jedem Erkennungsgerät (15) ausgegebenen Nummer an jeder Versorgungsstation (10) die Abgabe einer gegebenen Nahrungsportion zu steuern.

6. Vorrichtung nach einem der vorstehenden Ansprüche, dadurch gekennzeichnet, daß die Steuereinheit (40) vorgesehen ist, die Herstellung von Nahrung in der Herstellungswanne (31) sowie deren anschließende Umfüllung in die oder eine Vorratswanne zu bewirken, wenn eine bestimmte Menge aus der Vorratswanne (32) abgegeben wurde, wobei die Steuereinheit (40) die abgegebene Nahrungsmenge bestimmt, indem sie die für jede Portion verwendete Nahrungsmenge zusammenrechnet, die seit der zuletzt erfolgten Herstellung abgegeben wurde.

7. Vorrichtung nach Anspruch 6, dadurch gekennzeichnet, daß jede Steuereinheit (40) vorgesehen ist, die Umfüllung des Herstellungswanneninhalts in die oder eine Vorratswanne (32) am Ende eines nach dem Herstellungsbeginn vorbestimmten Zeitraums zu bewirken.

8. Vorrichtung nach einem der Ansprüche 5 bis 7, dadurch gekennzeichnet, daß die Steuereinheit (40) mit einer Datenbank (40b) ausgestattet ist, die von der von jedem Erkennungsgerät (15) ausgegebenen Identifikationsnummer adressiert werden kann, wobei jede Datenbank (40b) die Daten jedes Tiers der Herde erfaßt, welche die Berechnung der Mengen ermöglichen.

9. Vorrichtung nach einem der vorstehenden Ansprüche, dadurch gekennzeichnet, daß jede Versorgungsstation (10) mit einer Flasche (12) und einer Füllstandssonde (17) versehen ist, welche die in der Flasche (12) enthaltene Nahrungsmenge messen soll, wobei die Steuereinheit (40) die Abgabe einer neuen Portion in die Flasche (12) bewirkt, wenn diese leer ist, es sei denn, das Tier hat ein bestimmtes oder vorbestimmtes Portionsguthaben getrunken.

10. Vorrichtung nach einem der vorstehenden Ansprüche, dadurch gekennzeichnet, daß jede Versorgungsstation (10) mit einer Flasche (12) versehen ist, die selbst mit einem Sauger (14) ausgestattet ist, wobei der Sauger (14) so montiert ist, daß er eingezogen werden kann, wenn das Tier ein bestimmtes oder vorbestimmtes Portionsguthaben getrunken hat.

11. Vorrichtung nach einem der vorstehenden Ansprüche, dadurch gekennzeichnet, daß die Dosierstation (50) oder jede Dosierstation (50) eine Vorratswanne (51) umfaßt, die ein Zusatznahrungsmittel sowie Vorrichtungen (51c, 52b) zum Befüllen der Dosierwanne (52) mit einer bestimmten Menge Zusatznahrungsmittel enthalten soll, und die Steuereinheit (40) die für eine Portion erforderliche Flüssignahrungsmenge, flüssigen Zusatzstoffs und/oder Zusatznahrungsmittels bestimmt.
